# FASCICULE DE BREVET EUROPEEN

(11) **EP 1 323 623 B1**
(45) Date de publication et mention de la délivrance du brevet: **13.06.2007**
(21) Numéro de dépôt: 02293004.4
(22) Date de dépôt: 05.12.2002
(51) Int. Cl.: B62D 25/14, B62D 29/00

(54) **Ensemble structurel pour planche de bord**
Gesamtstruktur eines Armaturenbrettes
Structural unit for a dashboard

(30) Priorité: 27.12.2001 FR 0116946
(43) Date de publication de la demande: 02.07.2003
(73) Titulaire: Faurecia Interieur Industrie, 92000 Nanterre (FR)
(72) Inventeur: Brancheriau, Christian, Faurecia Interieur Ind., 60110 Meru (FR)
(74) Mandataire: Lerner, François

(56) Documents cités:
- FR-A- 2 808 480
- GB-A- 2 347 118
- US-A- 5 234 246
- US-A- 6 129 406

## Description

L'invention concerne un ensemble structurel pour planche de bord de véhicule automobile intégrant un conduit aéraulique.

On connaît de manière usuelle des planches de bord comprenant une traverse métallique par rapport à laquelle des conduits aéraulique souples sont fixés.

D'autre part, US-A-5 358 300 décrit un ensemble structurel de planche de bord comprenant un élément structurel constitué de plusieurs plaques nervurées fixées les unes aux autres, définissant entre elles des conduits aérauliques et présentant une résistance mécanique telle que ledit ensemble est dépourvu de traverse métallique.

Par ailleurs, FR-A-2 808 480, sur lequel document le préambule de la revendication 1 est fondé, décrit un conduit diffuseur d'air comprenant un premier élément présentant une rigidité suffisante pour avoir une forme propre et un deuxième élément ne présentant pas de rigidité propre. Ces deux éléments définissent entre eux un canal de circulation d'air. En outre, une gorge est ménagée dans le premier élément pour recevoir des câbles électriques et le deuxième élément recouvre cette gorge, afin d'y maintenir les câbles électriques. Ledit conduit est fixé sur une traverse tubulaire appartenant à la structure du véhicule.

Le document US-6129406 décrit un surmoulage d'un matériau alvéolaire dans une planche de bord.

L'invention a pour but de proposer un ensemble structurel aisé à réaliser, robuste, d'un poids réduit et proposant une protection optimum des occupants du véhicule dans lequel ledit ensemble sera monté.

Pour ce faire, conformément à l'invention, ledit ensemble comprend les caractéristiques de la revendication 1.

La traverse métallique assure l'essentiel des contraintes mécaniques, ce qui garantit une grande robustesse et une conception relativement simple. De plus, l'élément structurel assurant non seulement la fonction aéraulique, mais supportant en outre une partie des contraintes mécaniques, la traverse métallique peut être de moindre section.

Le surmoulage de la traverse assure une liaison robuste entre la traverse et l'élément structurel, une bonne cohésion et une bonne compacité de l'ensemble, ainsi qu'une simplicité de réalisation améliorée.

En outre, la disposition relative de l'élément structurel et de la traverse assure non seulement une répartition satisfaisante des efforts entre ces deux éléments, mais surtout en améliorant la compacité, elle augmente la longueur de déformation du véhicule avant intrusion à l'intérieur de l'habitacle.

En effet, en général, les véhicules comprennent une plaque de liaison s'étendant entre l'ensemble structurel de planche de bord et une traverse secondaire s'étendant à la base du pare-brise et dite traverse inférieure de baie. Lors d'un choc, cette plaque de liaison risque de pousser l'ensemble structurel de planche de bord à l'intérieur de l'habitacle du véhicule. En augmentant la compacité dudit élément structurel de planche de bord, on accroît la distance séparant ladite traverse inférieur de baie et l'élément structurel de planche de bord, autrement dit on réduit le risque d'intrusion à l'intérieur de l'habitacle du véhicule.

Selon une caractéristique avantageuse conforme à l'invention, le conduit aéraulique présente :
- une portion principale, sensiblement rectiligne, s'étendant sensiblement suivant ladite direction d'allongement dans un plan sensiblement horizontal passant par la traverse métallique,
- au moins une portion secondaire, sensiblement courbe, prolongeant la portion principale, s'écartant progressivement dudit plan sensiblement horizontal et passant au-dessus de la traverse métallique.

Ainsi, la traverse métallique n'est pas affaiblie mécaniquement à l'endroit du chevauchement avec le conduit et l'ensemble libère un espace dans la planche de bord au-dessus de la portion principale de la structure transversale pour y loger les différents accessoires (boîtier de coussin gonflable, tableau de bord, rangement,...).

Conformément à l'invention, la traverse présente une section sensiblement en U ouvert définissant un creux et la structure transversale comprend des nervures s'étendant dans ledit creux de la traverse.

La section en U permet d'obtenir un rapport satisfaisant entre la résistance mécanique et le poids. De plus, elle permet de disposer aisément les nervures à l'intérieur du creux pour éviter que la section de la traverse se déforme, sans augmenter notablement le poids.

De manière complémentaire, une caractéristique avantageuse de l'invention permettant de réaliser aisément l'ensemble tout en évitant que l'air circulant dans le conduit ne s'insère entre les nervures, génère du bruit et des pertes de charges, consiste en ce que :
- l'élément structurel comprenne un corps intégrant la traverse et un capot entre lesquels s'étend ledit conduit aéraulique,
- le conduit aéraulique passe au-dessus de la traverse dans une zone d'intersection,
- l'ensemble comprend en outre dans la zone d'intersection une couche de mousse aéraulique s'étendant au-dessus des nervures.

Ainsi, le corps et le capot de l'élément structurel peuvent être aisément obtenus par moulage et la zone d'intersection ne présente pas les inconvénients précités.

En outre, l'invention propose que le conduit comprenne une excroissance destinée à la fixation d'une colonne de direction de véhicule à l'élément structurel et que cette excroissance soit remplie au moins partiellement de mousse aéraulique.

Ainsi, la forme de l'élément structurel est adaptée pour supporter la colonne de direction sans compliquer sa réalisation par moulage ni perturber l'écoulement de l'air dans le conduit.

L'invention va apparaître encore plus clairement dans la description qui va suivre, faite en référence aux dessins annexés dans lesquels :

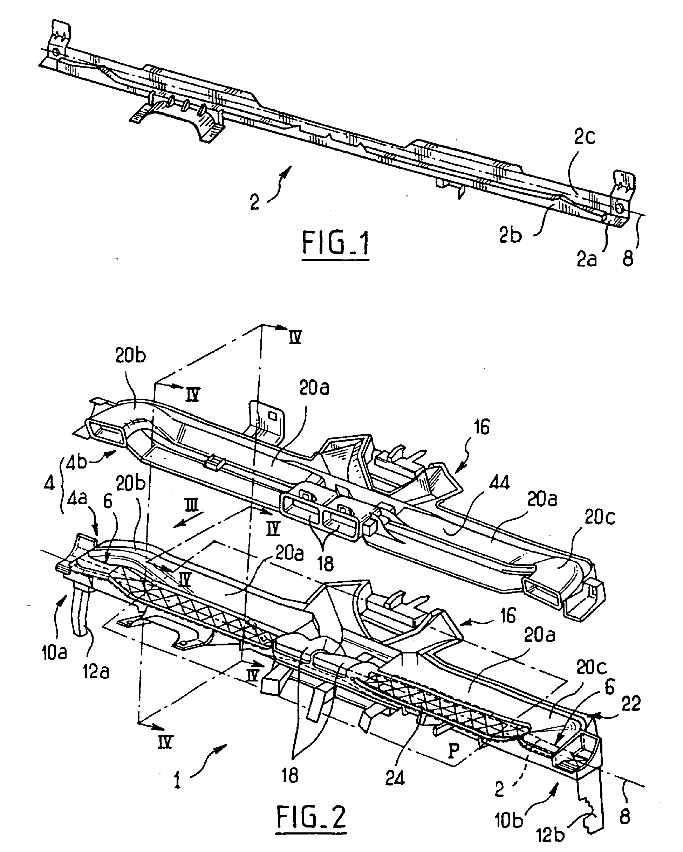

- la figure 1 est une vue en perspective d'une traverse métallique conforme à l'invention,
- la figure 2 est une vue en perspective éclatée d'un ensemble structurel conforme à l'invention,
- la figure 3 est une vue partielle en perspective suivant la flèche repérée III à la figure 2,
- la figure 4 est une vue en coupe suivant le plan repéré IV-IV sur la figure 2,
- la figure 5 est une représentation schématique, suivant le plan repéré IV-IV à la figure 2, à échelle réduite par rapport à la figure 4.

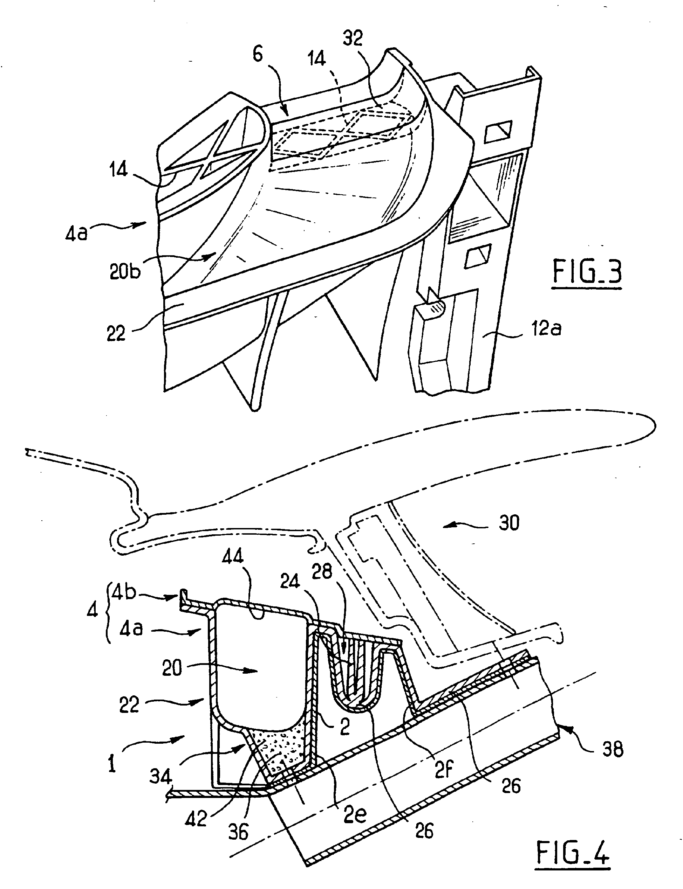

Tel qu'illustré, l'ensemble structurel 1 conforme à l'invention comprend une traverse 2 métallique et un élément structurel 4. Cet ensemble structurel 1 est destiné à être intégré à une planche de bord de véhicule automobile 30 (illustrée en trait mixte sur la figure 4).

La traverse 2 s'étend suivant une direction d'allongement 8 et présente une section sensiblement en forme de U ouverte vers le haut. Autrement dit schématiquement, elle comprend essentiellement une base 2a et deux flancs 2b, 2c faisant saillie perpendiculairement à la base et s'étendant sensiblement verticalement et suivant la direction d'allongement 8. La base 2a et les flancs 2b, 2c délimitent un creux 28.

L'élément structurel 4 est destiné à s'étendre transversalement dans le véhicule, à remplir une fonction de distribution de l'air conditionné dans l'habitacle du véhicule et à reprendre une partie des efforts supportés par la traverse 2. Il est accolé à la traverse 2 et s'étend sensiblement suivant la direction d'allongement 8 entre une extrémité gauche 10a et une extrémité droite 10b de l'ensemble structurel.

Il est réalisé en matériau plastique et comprend une partie inférieure 4a formant corps et une partie supérieure 4b formant capot. La partie inférieure 4a est moulée sur la traverse métallique 2 et constitue l'essentiel de l'élément structurel. Elle comprend une partie d'enrobage 26 s'étendant au-dessus de la traverse 2, des nervures entrecroisées 24 faisant saillie de la base 2a, dans le creux 28, ainsi qu'une goulotte 22.

Le capot 4b comprend une surface 44 formant couvercle venant obturer la partie supérieure de la goulotte 22 pour définir avec elle un conduit aéraulique transversal 20 composé de deux parties latérales.

L'élément structurel 4 comporte un ensemble aéraulique comprenant outre le conduit transversal 20, un collecteur 16 et des conduits centraux 18.

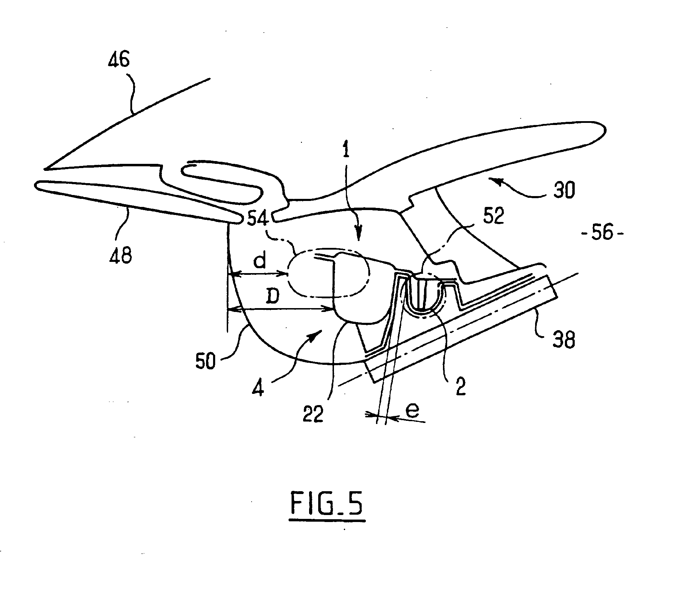

Le conduit transversal 20 présente une portion principale 20a et des portions secondaires 20b, 20c. Il s'étend le long de la traverse 2, sensiblement suivant la direction d'allongement 8, sur toute sa longueur à une distance e (voir figure 5) avantageusement inférieure à 5 centimètres.

La portion principale 20a communique d'une part avec le collecteur aéraulique 16 et avec les portions secondaires 20b, 20c, sensiblement en arc de cercle, débouchant à proximité des extrémités 10a, 10b de l'ensemble structurel.

La partie principale 20a est sensiblement rectiligne et s'étend suivant la direction d'allongement 8. La partie principale 20a et la traverse 2 s'étendent suivant un plan P qui est sensiblement horizontal lorsque l'élément structurel est monté sur un véhicule. Les portions secondaires 20b, 20c du conduit 20 s'élèvent progressivement au-dessus du plan P en se rapprochant des extrémités 10a, 10b, de sorte que le conduit 20 passe au-dessus de la traverse 2 et des nervures 24 dans des zones d'intersection 6 situées à proximité de chacune des extrémités 10a, 10b.

Dans ces zones d'intersection 6, les nervures 24 sont recouvertes d'une couche de mousse aéraulique 32 affleurant la surface de la goulotte 22, de sorte que le conduit 20 présente une section sensiblement constante. La couche de mousse 32 est avantageusement en matière plastique, du type absorbant phonique à cellules ouvertes, traitée en surface pour obtenir une couche superficielle de cellules fermées.

Le corps 4a de l'élément structurel 4, plus précisément la goulotte 22, comprend une excroissance dénommée godron 34, s'étendant en saillie vers le bas en direction d'un support 38 de colonne de direction. Ledit godron 34 est renforcé par une aile 2e de la traverse métallique 2 qu'il recouvre. Ledit goudron 34 et la traverse métallique 2 sont fixés par vissage (schématisé en figure 4 par le trait d'axe 40) au support 38 de colonne de direction, pour lier rigidement le support de colonne à l'ensemble structurel 1.

La présence de ce godron forme un creux 42 au fond de la goulotte qui est comblé au moins en partie par un bloc de mousse 36 aéraulique analogue à la couche 32. Ainsi, l'élément structurel 4 peut être aisément obtenu par moulage et le creux 42 aisément bouché.

La traverse métallique 2 présente une autre aile 2f recouverte par la partie d'enrobage 26 qui est également fixée au support 38 de colonne de direction.

Après avoir réalisé la traverse 2, surmoulé l'élément structurel 4 et mis en place la couche de mousse 32 dans le creux 28 et le bloc de mousse 36 dans le creux 42, on vient souder le capot 4b sur le corps 4a pour obtenir un ensemble structurel monobloc.

Avantageusement, l'élément structurel 4 présente une épaisseur de matière plastique sensiblement égale à 3 millimètres.

En outre, le corps 4a intègre des piliers 12a, 12b situés aux extrémités 10a, 10b et destinés à être fixés aux pieds avant du véhicule.

La figure 5 montre de façon schématique les principaux éléments disposés à proximité de la planche de bord 30 et susceptibles d'engendrer une intrusion à l'intérieur de l'habitacle du véhicule. Tel qu'illustré, une plaque de liaison métallique 50 relie l'élément structurel 1 à une traverse inférieure de baie 48 s'étendant depuis la base d'un pare-brise 46.

Une traverse 52 et un conduit aéraulique souple 54 conformes à l'art antérieur sont représentés en trait mixte. Le conduit aéraulique 54 est séparé de la plaque de liaison 50 par une distance d.

Le faible espacement e entre la goulotte 22 et la traverse 2, autrement dit l'extrême compacité de l'ensemble structurel 1 de l'invention assure une distance d'écrasement D avant que ladite plaque de liaison 50 vienne pousser sur l'élément structurel 1 vers un habitacle de véhicule 56 qui est supérieure à la distance d.

## Revendications

1. Ensemble structurel (1) pour planche de bord comprenant :
- une traverse métallique (2) s'étendant suivant une direction d'allongement (8), et
- un élément structurel (4) en matériau plastique lié rigidement à la traverse métallique et présentant un passage formant conduit aéraulique (20), ledit conduit aéraulique étant accolé à la traverse métallique par rapport à laquelle il s'étend sensiblement parallèlement,
**caractérisé en ce que**
- la traverse présente une section sensiblement en U ouvert définissant un creux (28),
- l'élément structurel (4) est moulé sur la traverse métallique (2), et
- l'élément structurel comprend des nervures (24) s'étendant dans ledit creux de la traverse.

2. Ensemble selon la revendication 1, **caractérisé en ce que** le conduit aéraulique présente :
- une portion principale (20a), sensiblement rectiligne, s'étendant sensiblement suivant ladite direction d'allongement dans un plan (P) sensiblement horizontal passant par la traverse métallique,
- au moins une portion secondaire (20b, 20c), sensiblement courbe, prolongeant la portion principale, s'écartant progressivement dudit plan sensiblement horizontal et passant au-dessus de la traverse métallique.

3. Ensemble selon la revendication 2, **caractérisé en ce que** :
- l'ensemble présente deux zones extrêmes (10a, 10b) suivant la direction d'allongement,
- l'ensemble comprend deux portions secondaires (20b, 20c) situées dans chacune desdites zones extrêmes.

4. Ensemble selon l'une quelconque des revendications précédentes, **caractérisé en ce que :**
- l'élément structurel comprend un corps (4a) intégrant la traverse et un capot (4b) entre lesquels s'étend ledit conduit aéraulique,
- le conduit aéraulique passe au-dessus de la traverse dans au moins une zone d'intersection (6),
- l'ensemble comprend en outre dans la zone d'intersection une couche de mousse aéraulique (32) s'étendant au-dessus des nervures (24).

5. Ensemble selon l'une quelconque des revendications précédentes, **caractérisé en ce que** le conduit aéraulique comprend une excroissance (34) destinée à la fixation d'une colonne de direction de véhicule à l'élément structurel (4) et que cette excroissance est remplie au moins partiellement de mousse aéraulique (36).

6. Ensemble selon l'une quelconque des revendications précédentes, **caractérisé en ce que** sur toute sa longueur le conduit aéraulique est distant de moins de 5 centimètres par rapport à la traverse métallique.

## Claims

1. A structural assembly (1) for a dashboard comprising:
- a metal cross-member (2) extending in a direction of elongation (8), and
- a structural member (4) made of plastics material connected rigidly to the metal cross-member and having a passage forming an air duct (20), said air duct being attached to the metal cross-member relative to which it extends substantially parallel,
**characterised in that**
- the cross-member has a section substantially having an open U-shape defining a hollow (28),
- the structural member (4) is moulded on the metal cross-member (2), and
- the structural member comprises ribs (24) extending into said hollow of the cross-member.

2. An assembly according to claim 1, **characterised in that** the air duct has:
- a main portion (20a), substantially rectilinear, extending substantially in said direction of elongation in a substantially horizontal plane (P) passing through the metal cross-member,
- at least one secondary portion (20b, 20c), substantially curved, prolonging the main portion, departing gradually from said substantially horizontal plane and passing over the metal cross-member.

3. An assembly according to claim 2, **characterised in that**:
- the assembly has two end zones (10a, 10b) in the direction of elongation,
- the assembly comprises two secondary portions (20b, 20c) located in each of said end zones.

4. An assembly according to any one of the preceding claims, **characterised in that**:
- the structural member comprises a body (4a) incorporating the cross-member and a covering cap (4b), between which said air duct extends,
- the air duct passes over the cross-member in at least one intersection zone (6),
- the assembly further comprises in the intersection zone a layer of ventilation foam (32) extending over the ribs (24).

5. An assembly according to any one of the preceding claims, **characterised in that** the air duct comprises a protuberance (34) intended for fixing a vehicle steering column to the structural member (4) and **in that** the protuberance is filled at least partially with ventilation foam (36).

6. An assembly according to any one of the preceding claims, **characterised in that** over its entire length the air duct is spaced less than 5 centimetres with respect to the metal cross-member.

## Patentansprüche

1. Gesamtstruktur (1) eines Armaturenbrettes mit:
- einer metallischen Traverse (2), die sich in einer Längsrichtung (8) erstreckt, und
- einem Strukturelement (4) aus Kunststoffmaterial, das steif an der metallischen Traverse befestigt ist und einen Durchgang aufweist, der eine Luftleitung (20) bildet, wobei die Luftleitung an die metallische Traverse, bezüglich welcher sie sich im wesentlichen parallel erstreckt, angefügt ist,
**dadurch gekennzeichnet, daß**
- die Traverse einen Querschnitt eines im wesentlichen offenen U aufweist, wobei ein Hohlraum (28) gebildet wird,
- das Strukturelement (4) auf der metallischen Traverse (2) geformt ist und
- das Strukturelement Rippen (24) aufweist, die sich in dem Hohlraum der Traverse erstrecken.

2. Aufbau nach Anspruch 1, **dadurch gekennzeichnet, daß** die Luftleitung aufweist:
- einen im wesentlichen geradlinigen Hauptabschnitt (20a), der sich im wesentlichen in der Längsrichtung in einer im wesentlichen horizontalen Ebene P erstreckt, welche durch die metallische Traverse hindurchgeht,
- mindestens einen im wesentlichen gekrümmten sekundären Abschnitt (20b, 20c), der den Hauptabschnitt verlängert, wobei er sich fortschreitend von der im wesentlichen horizontalen Ebene entfernt und über der metallischen Traverse vorbeigeht.

3. Aufbau nach Anspruch 2, **dadurch gekennzeichnet, daß**:
- der Aufbau zwei Endzonen (10a, 10b) in der Längsrichtung aufweist,
- der Aufbau zwei sekundäre Abschnitte (20b, 20c) aufweist, die in jeder der Endzonen angeordnet sind.

4. Aufbau nach einem der vorhergehenden Ansprüche, **dadurch gekennzeichnet, daß**:
- das Strukturelement einen Körper (4a) aufweist, welcher die Traverse und eine Haube (4b) integriert, zwischen welchen sich die Luftleitung erstreckt,
- die Luftleitung über der Traverse in mindestens eine Schnittzone (6) vorbeigeht,
- der Aufbau ferner in der Schnittzone eine Schicht aus Luftschaumstoff (32) aufweist, die sich über den Rippen (24) erstreckt.

5. Aufbau nah einem der vorhergehenden Ansprüche, **dadurch gekennzeichnet, daß** die Luftleitung eine Ausstülpung (34) aufweist, die für die Befestigung einer Lenksäule des Fahrzeuges an dem Strukturelement (4) bestimmt ist, und daß die Ausstülpung mindestens teilweise mit Luftschaumstoff (36) gefüllt ist.

6. Aufbau nach einem der vorhergehenden Ansprüche, **dadurch gekennzeichnet, daß** die Luftleitung auf ihrer gesamten Länge mindestens 5 cm von der metallischen Traverse entfernt ist.
